# EUROPÄISCHE PATENTANMELDUNG

(11) **EP 3 543 950 A1**
(43) Veröffentlichungstag der Anmeldung: **25.09.2019**
(21) Anmeldenummer: 18162833.0
(22) Anmeldetag: 20.03.2018
(51) Int. Cl.: G06Q 90/00

(54) **ÜBERWACHUNG VON EMISSIONEN MITTELS EINER VERTEILTEN DATENBANK**

(71) Anmelder: Siemens Aktiengesellschaft, 80333 München (DE)
(72) Erfinder: Bäumler, Tobias, 76351 Linkenheim-Hochstetten (DE); Fitzi, Daniel, 76356 Weingarten (DE); Koziol, Tobias, 76870 Kandel (DE); Labalette, Philippe, 76227 Kalrsruhe (DE); Langpeter, Katharina, 76137 Karlsruhe (DE)

(57) **Zusammenfassung**

Vorgeschlagen wird eine Vorrichtung (1) zur Übermittlung von charakteristischen Daten einer Emissionsmessung (3) einer industriellen Anlage (2), die dazu ausgebildet und vorgesehen ist:
- die charakteristischen Daten mittels wenigstens eines Kommunikationsprotokolls von einer Emissionsmessung (3) der industriellen Anlage (2) zu empfangen, und
- die zuvor empfangenen charakteristischen Daten in einem verteilten Datenbanksystem (4) zu hinterlegen, das vorzugsweise von einer zentralen Stelle (6) aus gesteuert wird.

## Beschreibung

Die Erfindung betrifft eine Vorrichtung zur Übermittlung charakteristischer Daten einer Emissionsmessung einer industriellen Anlage nach Anspruch 1. Außerdem betrifft die Erfindung ein Verfahren zur automatisierten Übermittlung charakteristischer Daten einer Emissionsmessung einer industriellen Anlage an eine Stelle außerhalb der industriellen Anlage nach Anspruch 5. Zudem betrifft die Erfindung ein verteiltes Datenbanksystem nach Anspruch 8.

Betreiber großer Verbrennungsanlagen und energieintensiver industrieller Anlagen nehmen am europäischen Emissionshandel in Deutschland teil. Dabei müssen so viele Berechtigungen abgebeben werden, wie Treibhausgase emittiert wurden. Die Emissionen werden auf Basis der im anlagenspezifischen Überwachungsplan abgebildeten Methoden jährlich ermittelt und in einem Emissionsbericht an die Deutsche Emissionshandelsstelle (DEHSt) im Umweltbundesamt übermittelt.

Für die Überwachung der Emissionen einer industriellen Anlage wählt der Anlagenbetreiber entweder eine auf Berechnungen oder eine auf Messung beruhende Methodik nach Maßgabe der spezifischen Vorschriften dieser Verordnung. Bei einer auf einer Messung beruhenden Methodik werden die Emissionen mittels einer kontinuierlichen Messung der Konzentration des betreffenden Treibhausgases im Abgasstrom und durch kontinuierliche Messung des Abgasstroms als solchem ermittelt.

Die Datenverwaltung, inklusive der Messdaten, und die Kontrolle werden von dem jeweiligen Betreiber der industriellen Anlage durchgeführt und dokumentiert. Eine Prüfung des Emissionsberichts erfolgt durch eine akkreditierte Prüfstelle.

Zum aktuellen Zeitpunkt ist nur eine manuelle Erstellung eines Überwachungsplans der Emissionsmessung und des Emissionsberichts bekannt. Eine Archivierung der Messdaten, Umrechnungsfaktoren, Eichungsnachweise und Kalibrierergebnisse von Messgeräten und dergleichen werden vom Anlagenbetreiber vorgenommen und händisch dem Emissionsbericht beigefügt.

Sämtliche Informationen beruhen dabei auf Angaben des Anlagenbetreibers. Dies kann dazu führen, dass Emissionsdaten fehlerhaft (unbewusst oder in betrügerischer Absicht) an die Prüfstelle weitergegeben werden, die eine Echtheit der Messdaten nur schwer nachweisen bzw. nachvollziehen kann. Regelmäßig entstehen daher hohe Kosten für spezielle Aggregierungsprüfungen, um eine Richtigkeit der Messdaten zu bestätigen.

Zudem bedarf das bislang durchgeführte händische Verfahren einer aufwändigen und umfassenden Schulung von Mitarbeitern in der industriellen Anlage.

Der Erfindung liegt die Aufgabe zugrunde, eine Vorrichtung und ein dazugehöriges Verfahren zur Übermittlung charakteristischer Daten einer Emissionsmessung einer industriellen Anlage anzugeben, dass einen Aufwand für einen Nachweis der Authentizität der charakteristischen Daten deutlich verringert und einen umfassenden Überblick über aktuelle charakteristische Daten für einen Betreiber der industriellen Anlage ermöglicht.

Diese Aufgabe wird gelöst durch eine Vorrichtung zur Übermittlung charakteristischer Daten einer Emissionsmessung einer industriellen Anlage nach Anspruch 1.

Die erfindungsgemäße Vorrichtung ist dazu ausgebildet und vorgesehen, die charakteristischen Daten mittels wenigstens eines Kommunikationsprotokolls von der Emissionsmessung der industriellen Anlage zu empfangen. Zudem ist sie dazu ausgebildet und vorgesehen, die zuvor empfangenen charakteristischen Daten in einem verteilten Datenbanksystem zu hinterlegen, das vorzugsweise von einer zentralen Stelle aus gesteuert wird.

Die Erfindung sieht vor, die charakteristischen Daten, beispielsweise Messdaten, Umrechnungsfaktoren oder Kalibrierergebnisse, nicht mehr lokal bei einem Betreiber der industriellen Anlage zu speichern und zu archivieren, sondern über eine sogenanntes verteiltes Datenbanksystem zu speichern. Dabei bestehen verteilte Datenbanksysteme aus mehreren, physisch voneinander getrennten Datenbanken, die unabhängig voneinander arbeiten und nach außen hin wie ein einziges logisches System agieren. Es kann sich dabei um eine genehmigungspflichtige Datenbank (permissioned ledger) oder eine öffentliche Open Source Datenbank handeln. Beispielsweise kann die offene Datenbank IOTA verwendet werden.

Hierzu weist die erfindungsgemäße Vorrichtung entsprechende Schnittstellen zu der Emissionsmessung der industriellen Anlage auf und ist dazu ausgebildet, die zuvor empfangenen charakteristischen Daten in dem verteilten Datenbanksystem zu hinterlegen.

Betrugsmöglichkeiten sind dabei stark reduziert, da die charakteristischen Daten zeitnah nicht nur beim Kunden gespeichert werden, sondern bei allen Knoten des verteilten Datenbanksystems.

Zudem werden meldepflichtige Betriebsartänderungen der industriellen Anlage oder Ausfälle der Emissionsmessung unverzüglich für eine zentrale an das verteilte Datenbanksystem angeschlossene Prüfstelle, wie beispielsweise die Deutsche Emissionshandelsstelle, sichtbar, da die Daten nicht einmal im Jahr (wie bisher) gemeldet werden, sondern kontinuierlich.

Eine Vor-Ort Prüfung beschränkt sich dabei nur noch auf eine Prüfung der Emissionsmessung und der erfindungsgemäßen Vorrichtung. Interviews von Mitarbeitern bezüglich der Erstellung der Prüfberichte und dergleichen sind nicht mehr notwendig, da der Transfer der charakteristischen Daten mittels der erfindungsgemäßen Vorrichtung automatisch ablaufen kann.

Bei der verteilten Datenbank kann es sich um eine Blockchain handeln. Es kommt sowohl eine genehmigungspflichtige Blockchain wie auch eine öffentliche open source Blockchain in Frage. Beispielsweise können Blockchain Plattformen wie Ethereum® genutzt werden.

Bei einer bevorzugten Weiterbildung der Erfindung ist die Vorrichtung dazu ausgebildet und vorgesehen, die empfangenen charakteristischen Daten mittels eines Mobilfunkdatenprotokolls in dem verteilten Datenbanksystem zu hinterlegen. Bei dem Mobilfunkdatenprotokoll kann es sich beispielsweise um GPRS, GSM oder LTE handeln.

Aufgrund der Möglichkeit, eine Mobilfunkverbindung zur Übertragung der charakteristischen Daten an das verteilte Datenbanksystem zu nutzen, muss die industrielle Anlage nicht direkt mit dem Internet verbunden werden, um die Daten zu übertragen. Dies kann eine Gefahr von Datendiebstählen und Hackerangriffen für den Betreiber der industriellen Anlage verringern.

Es ist aber auch möglich, die zuvor empfangenen charakteristischen Daten über eine entsprechende Schnittstelle ins Internet zu übertragen.

Vorteilhafterweise ist die Vorrichtung dazu ausgebildet und vorgesehen, die empfangenen charakteristischen Daten mittels eines asymmetrischen kryptographischen Verfahrens zu verschlüsseln, bevor sie in dem verteilten Datenbanksystem hinterlegt werden. Hierzu kann ein gängiges asymmetrisches kryptographisches Verfahren wie RSA verwendet werden. Hierzu weist die Vorrichtung vorteilhafterweise einen öffentlichen Schlüssel (public key) auf, der eine eindeutige Zuweisung der an die verteilte Datenbank übertragenen charakteristischen Daten ermöglicht. Für die Verschlüsselung der Daten kann zudem ein privater Schlüssel (private key) in der Vorrichtung hinterlegt sein.

Außerdem wird die Aufgabe gelöst durch ein Verfahren zur automatisierten Übermittlung charakteristischer Daten einer Emissionsmessung einer industriellen Anlage an eine Stelle außerhalb der industriellen Anlage, insbesondere an eine Emissionshandelstelle, mit den folgenden Verfahrensschritten:
a) Empfang der charakteristischen Daten von der Emissionsmessung der industriellen Anlage; und
b) Übertragung der zuvor empfangenen charakteristischen Daten in ein verteiltes Datenbanksystem, vorzugsweise eine Blockchain, die vorzugsweise von einer zentralen Stelle aus gesteuert wird, insbesondere von einer Emissionshandelsstelle.

Bei der zentralen Stelle kann es sich beispielsweise um die Deutsche Emissionshandelsstelle handeln.

Bevorzugt wird für die Übertragung der zuvor empfangenen charakteristischen Daten in das verteilte Datenbanksystem ein Mobilfunkdatenprotokoll, insbesondere LTE, GPRS oder GSM, verwendet.

Die empfangenen charakteristischen Daten können mittels eines asymmetrischen kryptographischen Verfahrens, insbesondere eines RSA-Verfahrens, verschlüsselt werden, bevor sie in dem verteilten Datenbanksystem hinterlegt werden.

Die Aufgabe wird zudem gelöst durch ein verteiltes Datenbanksystem, in dem charakteristische Daten einer Emissionsmessung einer industriellen Anlage hinterlegt sind. Bevorzugt ist dabei die Hinterlegung der charakteristischen Daten gemäß dem erfindungsgemäßen Verfahren erfolgt.

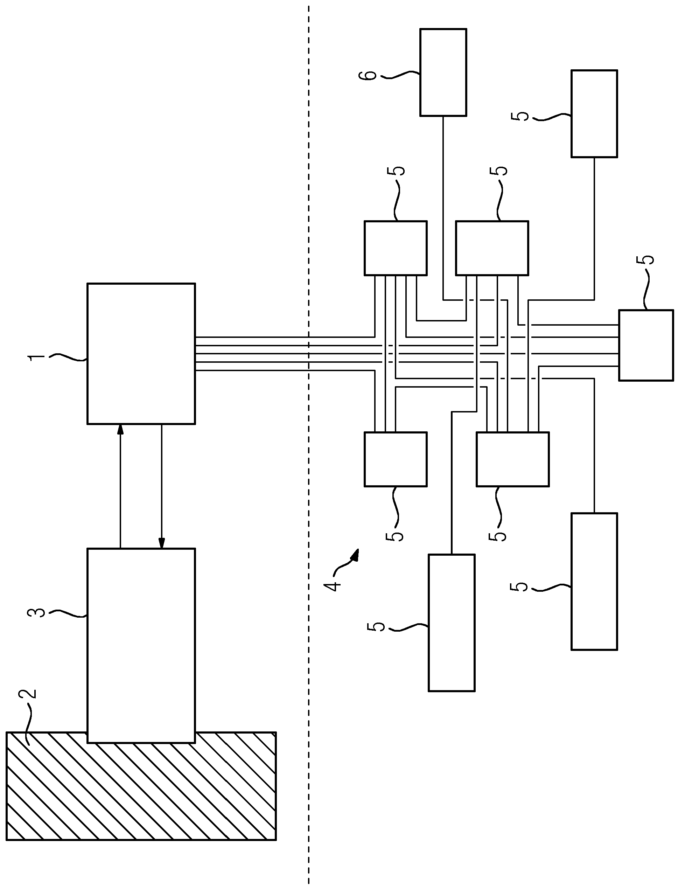

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Blockschaltbild einer erfindungsgemäßen Vorrichtung 1 dargestellt. In einer industriellen Anlage 2 werden charakteristische Daten einer Emissionsmessung 3 ermittelt. Dabei kann es sich um direkte Messdaten, beispielsweise eine Konzentration eines Treibhausgases in einem Abgasstrom, handeln. Charakteristische Daten können aber auch Umrechnungsfaktoren oder Kalibrierergebnisse sein. Die Emissionsmessung 3 läuft üblicherweise kontinuierlich ab. Die Messdaten werden dann ebenfalls kontinuierlich von der Vorrichtung 1 empfangen, um eine Abbildung eines aktuellen Status der Emissionsmessung 3 an die Vorrichtung 1 zu übertragen.

Für die Kommunikation zwischen der Vorrichtung 1 und der industriellen Anlage 2 können gängige Kommunikationsprotokolle wie Modbus, Modbus TCP/IP oder Profibus zum Einsatz kommen.

Es ist ebenso möglich die Vorrichtung 1 direkt in der industriellen Anlage 2 zu integrieren.

Die Vorrichtung 1 ist dazu ausgebildet und vorgesehen, die empfangenen charakteristischen Daten mittels eines Mobilfunkdatenprotokolls in einem verteilten Datenbanksystem 4 zu hinterlegen. Bei dem Mobilfunkdatenprotokoll kann es sich beispielsweise um GPRS, GSM oder LTE handeln.

Die empfangenen charakteristischen Daten werden von der Vorrichtung 1 vor der Übertragung an die verteilte Datenbank 4 verschlüsselt. Hierzu wird ein gängiges asymmetrisches kryptographisches Verfahren wie RSA verwendet. Hierzu weist die Vorrichtung 1 einen öffentlichen Schlüssel (public key) auf, der eine eindeutige Zuweisung der an die verteilte Datenbank 4 übertragenen charakteristischen Daten ermöglicht. Für die Verschlüsselung der Daten ist zudem ein privater Schlüssel (private key) in der Vorrichtung 1 hinterlegt.

Die verteilte Datenbank 4 ist dezentral bei mehreren Akteuren 5 gespeichert und wird zentral von einem steuernden Akteur 6 gesteuert. Bei dem steuernden Akteur 6 kann es sich beispielsweise um die Deutsche Emissionshandelsstelle handeln. Bevorzugt handelt es sich bei der verteilten Datenbank 4 um eine Blockchain, insbesondere um Ethereum®.

Die Einsicht in die in der Datenbank 4 hinterlegten Daten ist für jeden der Akteure 5 möglich. Allerdings ist eine Zuweisung der öffentlichen Schlüssel zu den tatsächlichen Emissionsorten (also den jeweiligen industriellen Anlagen oder dergleichen) nur dem jeweiligen Betreiber der industriellen Anlage 2 und dem steuernden Akteur 6 bekannt. Mittels der Vorrichtung 1 kann ein Betreiber der industriellen Anlage 1 jederzeit und bei Verwendung einer geeigneten Applikation auch von jedem beliebigen Ort aus die aktuellen Emissionen seiner industriellen Anlage 1 einsehen und überwachen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zur Übermittlung charakteristischer Daten einer Emissionsmessung (3) einer industriellen Anlage (2), die dazu ausgebildet und vorgesehen ist:
- die charakteristischen Daten mittels wenigstens eines Kommunikationsprotokolls von der Emissionsmessung (3) der industriellen Anlage (2) zu empfangen, und
- die zuvor empfangenen charakteristischen Daten in einem verteilten Datenbanksystem (4) zu hinterlegen, das vorzugsweise von einer zentralen Stelle (6) aus gesteuert wird.

2. Vorrichtung (1) nach Anspruch 1, die dazu ausgebildet und vorgesehen ist, die empfangenen charakteristischen Daten mittels eines Mobilfunkdatenprotokolls in dem verteilten Datenbanksystem (4) zu hinterlegen.

3. Vorrichtung (1) nach Anspruch 1 oder 2, die dazu ausgebildet und vorgesehen ist, die empfangenen charakteristischen Daten mittels eines asymmetrischen kryptographischen Verfahrens zu verschlüsseln, bevor sie in dem verteilten Datenbanksystem (4) hinterlegt werden.

4. Vorrichtung (1) nach Anspruch 3, die dazu ausgebildet und vorgesehen ist, die zuvor empfangenen charakteristischen Daten in einer Blockchain zu hinterlegen.

5. Verfahren (1) zur automatisierten Übermittlung charakteristischer Daten einer Emissionsmessung (3) einer industriellen Anlage (2) an eine Stelle außerhalb der industriellen Anlage (2), insbesondere an eine Emissionshandelstelle (6), umfassend:
a) Empfang der charakteristischen Daten der Emissionsmessung (3) der industriellen Anlage (2) mittels wenigstens eines Kommunikationsprotokolls;
b) Übertragung der zuvor empfangenen charakteristischen Daten in ein verteiltes Datenbanksystem (4), vorzugsweise eine Blockchain, die vorzugsweise von einer zentralen Stelle (6) aus gesteuert wird, insbesondere von einer Emissionshandelsstelle (6).

6. Verfahren nach Anspruch 5, bei dem zur Übertragung der zuvor empfangenen charakteristischen Daten in das verteilte Datenbanksystem (4) ein Mobilfunkdatenprotokoll, insbesondere LTE, GPRS oder GSM, verwendet wird.

7. Verfahren nach Anspruch 5 oder 6, bei dem die empfangenen charakteristischen Daten mittels eines asymmetrischen kryptographischen Verfahrens, insbesondere eines RSA-Verfahrens, verschlüsselt werden, bevor sie in dem verteilten Datenbanksystem (4) hinterlegt werden.

8. Verteiltes Datenbanksystem (4), in dem charakteristische Daten einer Emissionsmessung (3) einer industriellen Anlage (2) hinterlegt sind.

9. Verteiltes Datenbanksystem (4) nach Anspruch 8, bei dem die Hinterlegung der charakteristischen Daten gemäß einem Verfahren nach einem der Ansprüche 5 bis 7 erfolgt ist.
